# EUROPÄISCHE PATENTSCHRIFT

(11) **EP 3 048 211 B1**
(45) Veröffentlichungstag und Bekanntmachung des Hinweises auf die Patenterteilung: **18.11.2020**
(21) Anmeldenummer: 15000208.7
(22) Anmeldetag: 24.01.2015
(51) Int. Cl.: E04C 5/06, E04C 5/16

(54) **Schubbewehrungsvorrichtung**
Thrust reinforcement device
Dispositif d'armature de cisaillement

(43) Veröffentlichungstag der Anmeldung: 27.07.2016
(73) Patentinhaber: HALFEN GmbH, 40764 Langenfeld (DE)
(72) Erfinder: Ricker, Marcus, 63110 Rodgau (DE); Albartus, Dirk, 44795 Bochum (DE); Jäsche, Andreas, 42657 Solingen (DE)
(74) Vertreter: Wasmuth, Rolf

(56) Entgegenhaltungen:
- US-A- 910 399
- US-A1- 2009 188 201
- US-A1- 2011 308 192

## Beschreibung

Die Erfindung betrifft eine Schubbewehrungsvorrichtung der im Oberbegriff des Anspruchs 1 angegebenen Gattung.

Aus der DE 295 21 530 U1 ist eine Schubbewehrungsvorrichtung für Flachdecken bekannt. Die Schubbewehrungsvorrichtung umfasst ein Schubbewehrungselement und ein Befestigungselement. Mit dem Befestigungselement ist das Schubbewehrungselement an zwei jeweils seitlich am Schaft des Schubbewehrungselements anliegenden Bewehrungsstäben befestigt. Die Bewehrungsstäbe verlaufen im Bereich des Kopfs des Schubbewehrungselements, wobei das den Schaft des Schubbewehrungselements umgreifende Befestigungselement am Kopf des Schubbewehrungselements anliegt. Damit ist die Position des Schubbewehrungselements von der Einbaulage der Bewehrungsstäbe abhängig, so dass beim Einbau sehr exakt auf die Position der Bewehrungsstäbe geachtet werden muss. Darüber hinaus können, da die Bewehrungsstäbe am Schaft der Schubbewehrungselemente anliegen, die Schubbewehrungselemente nur entlang der Bewehrungsstäbe positioniert werden. Damit müssen an sämtlichen Stellen der Flachdecke, an denen Schubbewehrungselemente erforderlich sind, Bewehrungsstäbe verbaut sein. Die Bewehrungsstäbe müssen auch dann verbaut werden, wenn die Bewehrungsstäbe an diesen Stellen zur Lastaufnahme technisch nicht erforderlich sind.

Die US 2009/0188201 A1 zeigt eine Schubbewehrungsvorrichtung, gemäß dem Oberbegriff von Anspruch 1, bei der die Schubbewehrungselemente über Leisten miteinander verbunden sind. Die Schubbewehrungselemente können in Aussparungen der Leisten angeordnet sein. Die Aussparungen sind so bemessen, dass die Schubbewehrungselemente fest in den Aussparungen gehalten sind.

Der Erfindung liegt die Aufgabe zugrunde, eine Schubbewehrungsvorrichtung der gattungsgemäßen Art zu schaffen, die bei hoher Variabilität zur Verwendung bei verschiedenen baulichen Anforderungen einen einfachen, schnellen, wenig planungsintensiven und präzisen bauseitigen Einbau ermöglicht.

Diese Aufgabe wird durch eine Schubbewehrungsvorrichtung für Flachdecken mit den Merkmalen des Anspruchs 1 gelöst.

Das Schubbewehrungselement ist in der Befestigungsstellung mit dem Befestigungselement an einem länglichen Halteelement befestigt, wobei das längliche Halteelement in der Befestigungsstellung zum Anliegen am Bewehrungsstab vorgesehen ist. Das Schubbewehrungselement ist in der Befestigungsstellung in Richtung der Längsachse des Schubbewehrungselements verschiebbar. Durch die Verschiebbarkeit des Schubbewehrungselements in Richtung der Längsachse des Schubbewehrungselements kann das Schubbewehrungselement in verschiedenen Höhen am Halteelement fixiert werden, so dass die Schubbewehrungsvorrichtung variabel vor Ort an die Stahl- oder Spannbetonkonstruktion angepasst werden kann. Durch die Verstellbarkeit kann das Halteelement insbesondere auf unteren oder oberen Bewehrungsstäben, beispielsweise Längsbewehrungsstäbe oder Querbewehrungselemente, aufgelegt werden. Durch die Verwendung des Halteelements ist die Positionierung der Schubbewehrungselemente weitgehend unabhängig von der Position der Bewehrungsstäbe. Damit können sowohl die Bewehrungsstäbe, als auch die Schubbewehrungselemente lastoptimal in der Stahl- oder Spannbetonkonstruktion angeordnet werden. Zweckmäßig werden die Schubbewehrungselemente nach der, insbesondere automatisierten, Montage der Bewehrungsstäbe, insbesondere der Gitterträger, eingebaut. Damit ist der, insbesondere automatisierte, Herstellprozess nicht gestört und es ist eine sehr hohe Variabilität gegeben, da die Position der Schubbewehrungselemente gegebenenfalls vor Ort auf der Baustelle angepasst werden kann. Mit der vorgeschlagenen Schubbewehrungsvorrichtung kann eine Vielzahl an technischen Einsatzgebieten abgedeckt werden. Zweckmäßig werden die Bauteile der Schubbewehrungsvorrichtung im Herstellwerk gefertigt, in Einzelteilen in einem Lager gelagert, in Einzelteilen transportiert, an der Baustelle vor Ort oder im FTW (Fertigteilwerk) zusammengesetzt, um schließlich in der Betonkonstruktion verbaut zu werden. Damit ist eine sehr hohe Flexibilität gegeben. Die Schubbewehrungsvorrichtung ist für Platten, insbesondere für Flachdecken oder Balkonplatten, vorgesehen.

Das Halteelement ist eine Leiste, die Kerben umfasst. Die Kerben sind vorgesehen, um Schubbewehrungselemente mit unterschiedlichen Schaftdurchmessern aufzunehmen. Die Leiste ist einfach herzustellen, gut zu lagern und einfach zu verbauen.

Vorteilhaft umfasst das Befestigungselement mindestens einen Schafthalter, der den Schaft des Schubbewehrungselements teilweise umgreift. Insbesondere umgreift der Schafthalter den Schaft des Befestigungselements formschlüssig. Dadurch kann auf einfache Weise gewährleistet werden, dass das Schubbewehrungselement in der Befestigungsstellung verschiebbar ist, wobei der Verschiebeweg insbesondere etwa der Länge des Schafts entspricht. Zusätzlich kann gewährleistet werden, dass das Schubbewehrungselement vom Befestigungselement fest und sicher gehalten wird, so dass insbesondere die lagesichere Fixierung des Schubbewehrungselements sichergestellt ist.

Vorzugsweise umfasst der Schafthalter mindestens einen Hohlzylinder, wobei der Hohlzylinder in einer zur Zylinderlängsachse parallelen Richtung mindestens teilweise geöffnet ist, und wobei in Befestigungsstellung der Schaft an der Innenseite des Hohlzylinders mindestens teilweise anliegt. Dadurch liegt das Schubbewehrungselement flächig am Schafthalter an, so dass der Schafthalter insbesondere durch Haftreibung das Schubbewehrungselement in seiner Position halten kann.

Zweckmäßig ist der Schafthalter in der Befestigungsstellung mit dem Schaft des Schubbewehrungselements formschlüssig verbunden. Insbesondere ist der Schafthalter in der Befestigungsstellung mit dem Schaft des Schubbewehrungselements verrastet. Damit ist eine einfache, schnelle und werkzeuglose Montage möglich. Gleichzeitig ist ein sicherer Halt zwischen Schafthalter und Schubbewehrungselement gegeben.

Vorteilhaft ist das Befestigungselement an mindestens zwei Befestigungspositionen am Halteelement festlegbar, wobei die mindestens zwei Befestigungspositionen in Richtung der Längsachse des Halteelements einen Abstand aufweisen. Damit kann das Schubbewehrungselement an unterschiedlichen Positionen am Halteelement festgelegt werden. Außerdem können mehrere Schubbewehrungselemente am Halteelement festgelegt werden.

Vorzugsweise ist am Befestigungselement ein Rastelement vorgesehen, wobei das Rastelement in der Befestigungsstellung mit dem Halteelement verrastet ist. Damit ist eine einfache, schnelle und werkzeuglose Montage möglich. Gleichzeitig ist ein sicherer und fester Halt zwischen Befestigungselement und Halteelement gewährleistet.

Zweckmäßig umfasst das Halteelement eine Positionsmarkierung. Die Positionsmarkierung zeigt zweckmäßig die Position des Befestigungselements am Halteelement an. Eine solche Positionsmarkierung ist beispielsweise eine Skala, die Längen insbesondere in Längsrichtung des Halteelements angibt. Die Positionsmarkierung ist insbesondere in das Halteelement eingraviert. Dadurch ist ein dauerhaftes und weitgehend verschmutzungsunabhängiges Ablesen der Positionsmarkierung möglich. Damit kann auf sehr einfache und schnelle Weise die Position des Befestigungselements am Halteelement bestimmt werden. Ein Vermessen mit zusätzlichen Messmitteln wie einem Maßband, einem Zollstock, einem Meterstab oder dgl. Messmittel kann entfallen.

Vorzugsweise weist ein Ende des Schafts des Schubbewehrungselements einen Kopf auf, wobei am Kopf ein Distanzelement angeordnet ist. Zweckmäßig liegt das Distanzelement an der Schalung an. Damit ist ein vorgegebener Abstand zwischen dem Kopf des Schubbewehrungselements und der Schalung einstellbar. Ein solcher Abstand ist beispielsweise erforderlich, um Korrosion von Bauteilen und damit ein Versagen der Betonkonstruktion zu verhindern.

Zweckmäßig ist das Halteelement plastisch verformbar. Damit kann das Halteelement beim Anlegen an die Bewehrungsstäbe, insbesondere von einem Bediener, verformt werden, wodurch beispielsweise toleranzbedingte oder konstruktionsbedingte Abstände von Bewehrungsstäben, beispielsweise baulich bedingte Höhenunterschiede benachbarter Bewehrungsstäbe, ausgeglichen werden können. Damit kann die gesamte Konstruktion besser auf das Lastverhalten abgestimmt werden. Auch können durch die plastische Verformbarkeit des Halteelements die Toleranzen beim Einbau der Bewehrungsstäbe unabhängig von der Schubbewehrungsvorrichtung gewählt werden, wodurch der Bau der Betonkonstruktion vereinfacht ist.

Vorteilhaft verlaufen die Längsrichtung des Schafts des Schubbewehrungselements und die Längsrichtung des Halteelements quer, also nicht parallel, insbesondere etwa orthogonal, zueinander.

Vorzugsweise sind das Befestigungselement und der Schaft des Schubbewehrungselements in der Befestigungsstellung reibschlüssig miteinander verbunden. Insbesondere kann die Haftreibung zwischen Schubbewehrungselement und Befestigungselement beim Verschieben überwunden werden. Nach dem Verschieben ist der Reibschluss wieder hergestellt. Dadurch ist ein sicheres und festes Verbinden von Befestigungselement und Schubbewehrungselement ermöglicht. Gleichzeitig ist die Möglichkeit der Verschiebung des Schubbewehrungselements in Längsrichtung sichergestellt.

Ausführungsbeispiele der Erfindung werden im Folgenden anhand der Zeichnung erläutert. Es zeigen:
- Fig. 1: eine schematische Darstellung einer nicht erfindungsgemäßen Schubbewehrungsvorrichtung für eine Stahlbetonkonstruktion,
- Fig. 2: eine schematische Darstellung einer weiteren nicht erfindungsgemäßen Schubbewehrungsvorrichtung für die Stahlbetonkonstruktion,
- Fig. 3 bis 6: schematische Darstellungen der Schubbewehrungsvorrichtung für die Stahlbetonkonstruktion in unterschiedlichen Ausführungsbeispielen,
- Fig. 7: eine Draufsicht auf ein nicht erfindungsgemäßes Halteelement,
- Fig. 8: eine Draufsicht auf ein weiteres nicht erfindungsgemäßes Halteelement,
- Fig. 9: eine Draufsicht auf ein weiteres nicht erfindungsgemäßes Halteelement,
- Fig. 10: eine Seitenansicht eines nicht erfindungsgemäßen Befestigungselements,
- Fig. 11: eine Seitenansicht des Befestigungselements in Richtung des Pfeils VI in Fig. 10,
- Fig. 12: eine Seitenansicht des Befestigungselements in Richtung des Pfeils VII in Fig. 10,
- Fig. 13 bis 19: schematische Darstellungen der Schubbewehrungsvorrichtung bzw. deren Bauteile in einem weiteren Ausführungsbeispiel,

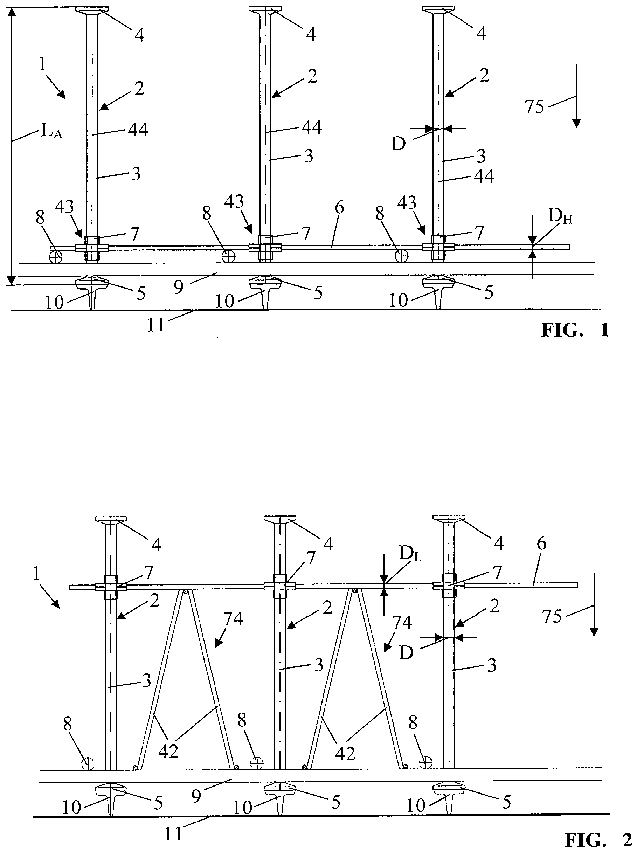

Fig. 1 zeigt eine nicht erfindungsgemäße Schubbewehrungsvorrichtung 1. Die Schubbewehrungsvorrichtung 1 ist für Platten, insbesondere für Flachdecken und Balkonplatten, vorgesehen. Die Schubbewehrungsvorrichtung 1 umfasst mehrere Schubbewehrungselemente 2, die im Wesentlichen die Form eines Bolzens aufweisen. Die Längsachsen 44 der Schubbewehrungselemente 2 verlaufen etwa parallel zueinander. Die Längsachsen 44 der Schubbewehrungselemente 2 verlaufen etwa vertikal. Jedes Schubbewehrungselement 2 ist als Doppelkopfanker ausgebildet und besteht aus einem Schaft 3 mit einem Schaftdurchmesser D, mit einer Ankerlänge L_{A}, einem am oberen Ende des Schafts 3 angeordneten oberen Kopf 4 und einem am unteren Ende des Schafts 3 angeordneten unteren Kopf 5. Im Ausfuhrungsbeispiel können schmale, glatte Doppelkopfanker mit einem Schaftdurchmesser D von höchstens 20 mm und einer Ankerlänge L_{A} von höchstens 30 cm eingesetzt sein. Je nach Maschine kann der Schaftdurchmesser D und die Ankerlänge L_{A} auch abweichende Größen annehmen.

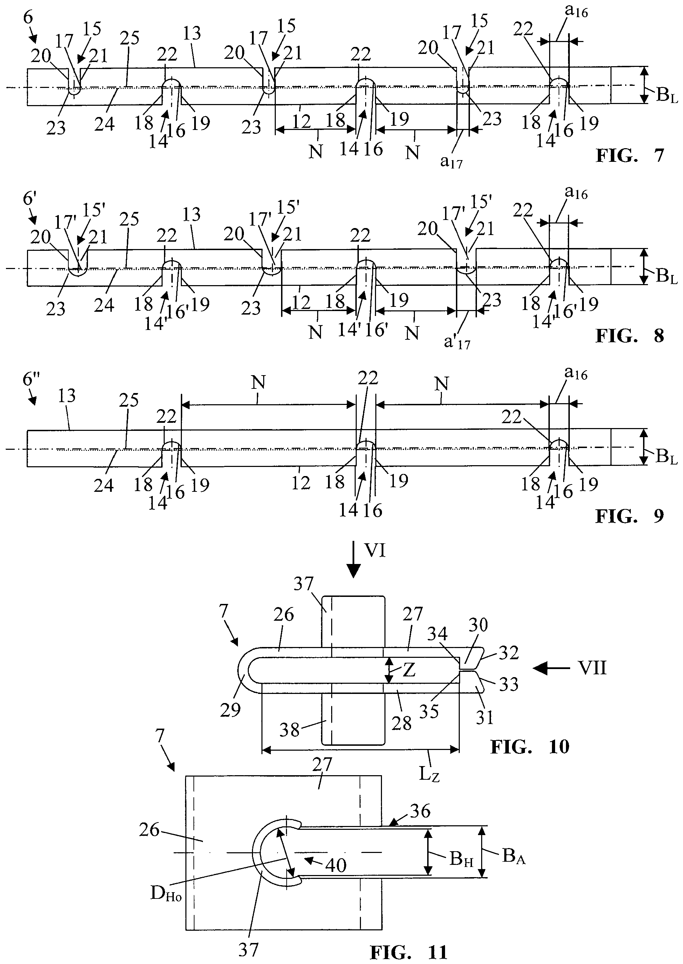

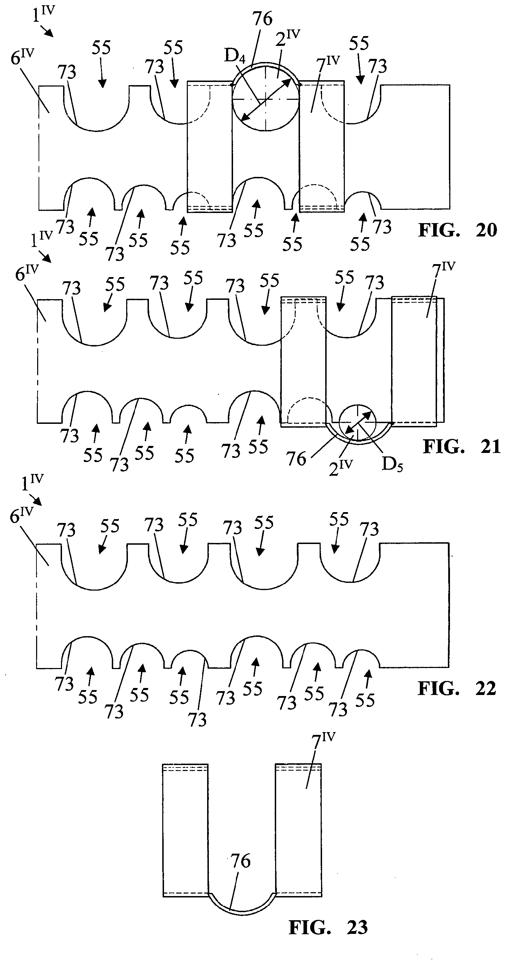

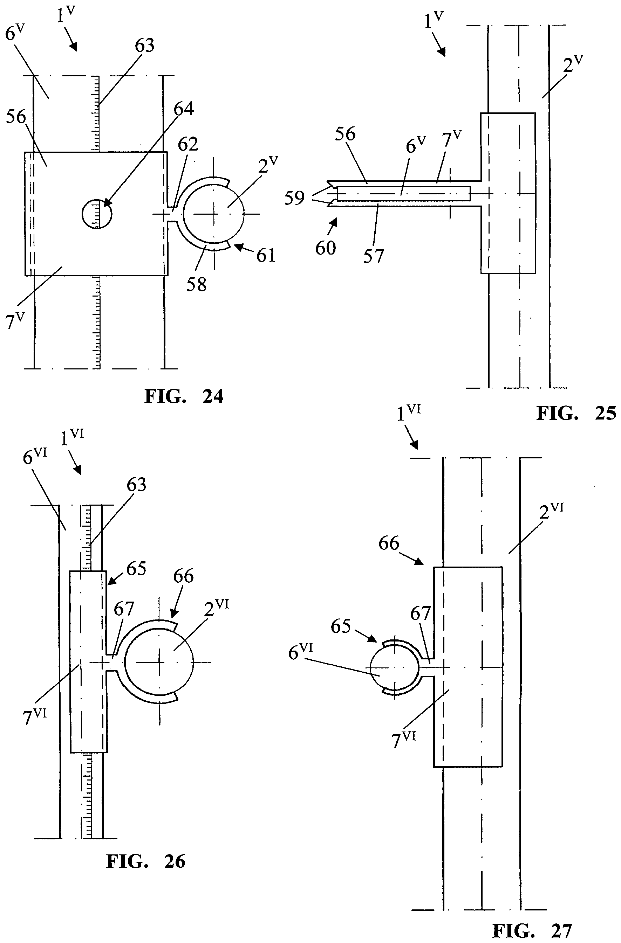

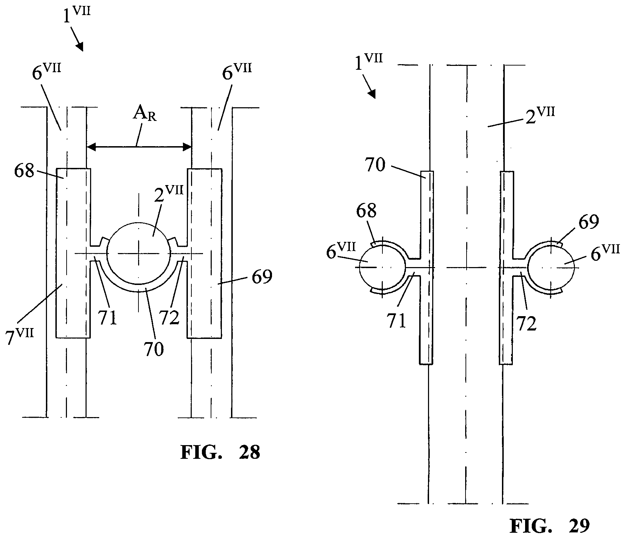

Die Schubbewehrungsvorrichtung 1 umfasst ein längliches Halteelement 6, das etwa horizontal verläuft. Weiter unten ist beschrieben, dass das längliche Halteelement 6 als Leiste (Fig. 7 bis 9, 13 bis 22, 24 und 25) oder als Stab, beispielsweise als Rundstab (Fig. 26 bis 29), ausgebildet sein kann. Das Halteelement 6 ist etwa orthogonal zu den Schubbewehrungselementen 2 angeordnet. Die Schubbewehrungsvorrichtung 1 umfasst Befestigungselemente 7. Jedes Befestigungselement 7 befestigt ein Schubbewehrungselement 2 an dem Halteelement 6, wobei das Schubbewehrungselement 2 in vertikaler Richtung 75, also parallel zu den Längsachsen 44 der Schubbewehrungselemente 2, verschiebbar im Befestigungselement 7 gehalten ist. Hierbei umgreift das Befestigungselement 7 den Schaft 3 des Schubbewehrungselements 2, und das Befestigungselement 7 ist mit dem Halteelement 6 verrastet. Der genaue Aufbau des Befestigungselements 7 wird weiter unten anhand der Figuren 10 bis 12 erläutert.

Das Halteelement 6 liegt im Ausfuhrungsbeispiel nach Fig. 1 auf horizontal verlaufenden, ersten Bewehrungsstäben 8 auf. Die ersten Bewehrungsstäbe 8 liegen auf horizontal verlaufenden, zweiten Bewehrungsstäben 9 auf. Die ersten Bewehrungsstäbe 8 verlaufen etwa orthogonal zu den zweiten Bewehrungsstäben 9. Die ersten und zweiten Bewehrungsstäbe 8, 9 bilden ein Gitter aus Längsbewehrungsstäben. Die Bewehrungsstäbe 8, 9 sind vorgesehen, um Zug- und Druckkräfte aufzunehmen. Die Schubbewehrungselemente 2 sind vorgesehen, um Schubkräfte aufzunehmen.

Die unteren Köpfe 5 der Schubbewehrungselemente 2 liegen auf Distanzelementen 10 auf. Die Distanzelemente 10 liegen auf einer äußeren Schalung 11 einer zu gießenden Betondecke auf. Die Distanzelemente 10 sind vorgesehen, damit die Schubbewehrungselemente 2 einen Mindestabstand zur späteren Außenseite der Stahlbetonkonstruktion aufweisen. Bei einem zu geringen Mindestabstand kann es zu Korrosion des Schubbewehrungselements 2 und damit zu einer Beschädigung der Betonkonstruktion kommen.

Die Fig. 2 zeigt eine Betonkonstruktion mit einer weiteren, nicht erfindungsgemäßen Schubbewehrungsvorrichtung 1. Zusätzlich zum Ausführungsbeispiel nach Fig. 1 sind in der Betonkonstruktion nach Fig. 2 als Bewehrungsstäbe 74 Querbewehrungselemente 42 vorgesehen. Aufgrund der Querbewehrungselemente 42 kann das Halteelement 6 nicht wie im Ausfuhrungsbeispiel nach Fig. 1 auf den ersten Bewehrungsstäben 8 aufliegen, sondern das Halteelement 6 liegt im Ausführungsbeispiel nach Fig. 2 auf den Querbewehrungselementen 42 auf. Da das Befestigungselement 7 entlang des Schafts 3 des Schubbewehrungselements 2 verschiebbar ist, ist jede beliebige Höhenposition einstellbar. Spätestens beim Einbau kann die Schubbewehrungsvorrichtung 1 den baulichen Erfordernissen angepasst werden. Eine Vormontage im Werk oder gar ein Schweißen im Werk oder auf der Baustelle ist nicht erforderlich.

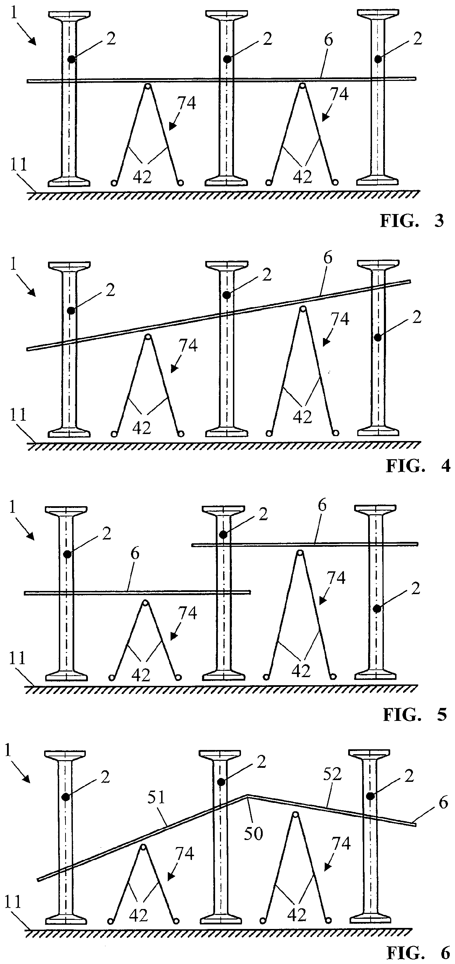

Die Fig. 3 bis 6 zeigen in schematischen Darstellungen Ausführungsbeispiele einer Betonkonstruktion mit der Schubbewehrungsvorrichtung 1. Zur übersichtlicheren Darstellung sind in den Fig. 3 bis 6 jeweils nur die Schubbewehrungselemente 2, die Halteelemente 6, die Querbewehrungselemente 42 und die Schalung 11 dargestellt. Weitere, nicht dargestellte Bauteile wie beispielsweise Distanzelemente 10 (Fig. 2), Befestigungselemente 7 (Fig. 2), und dgl. können auch in diesen Ausführungsbeispielen vorgesehen sein.

Das Ausführungsbeispiel nach Fig. 3 entspricht im Wesentlichen dem Ausführungsbeispiel nach Fig. 2. Das Halteelement 6 liegt auf den Querbewehrungselementen 42 auf. Die beiden in Fig. 3 gezeigten Querbewehrungselemente 42 besitzen von der Schalung 11 aus gemessen etwa die gleiche Höhe. Dadurch verläuft die Längsrichtung des Halteelements 6 parallel zur Schalung 11. Im Ausführungsbeispiel nach Fig. 3 verläuft die Längsrichtung des Halteelements 6 etwa horizontal.

Im Ausführungsbeispiel nach Fig. 4 besitzen die beiden Querbewehrungselemente 42 von der Schalung 11 aus gemessen unterschiedliche maximale Höhen. Das etwa gerade ausgebildete Halteelement 6 liegt auf beiden Querbewehrungselementen 42 auf. Aufgrund der unterschiedlichen Höhen der Querbewehrungselemente 42 verlaufen die Längsrichtung des Halteelements 6 und die Ebene der Schalung 11 nicht parallel, also quer zueinander.

Im Ausfuhrungsbeispiel nach Fig. 5 besitzen die beiden Querbewehrungselemente 42 von der Schalung 11 aus gemessen unterschiedliche maximale Höhen. Jeweils zwei benachbarte Schubbewehrungselemente 2 sind mit jeweils einem Halteelement 6 verbunden, wobei die Längsrichtung eines jeden Halteelements 6 etwa horizontal und damit etwa parallel zur Schalung 11 verläuft. Das in Fig. 5 dargestellte mittlere Schubbewehrungselement 2 ist an zwei Halteelementen 6 angeordnet.

Im Ausführungsbeispiel nach Fig. 6 besitzen die beiden Querbewehrungselemente 42 von der Schalung 11 aus gemessen unterschiedliche maximale Höhen. Das in Fig. 6 gezeigte Halteelement 6 weist zwei im Wesentlichen gerade verlaufende Abschnitte 51, 52 auf. Die beiden Abschnitte 51, 52 gehen an einer Kante 50 ineinander über. Die Abschnitte 51, 52 sind derart geformt, dass das Halteelement 6 auf beiden Querbewehrungselementen 42 aufliegt. Vor Ort auf der Baustelle ist das Halteelement 6 typischerweise zunächst gerade, wie beispielsweise in Fig. 4 gezeigt. Aufgrund der plastischen Verformbarkeit des Halteelements 6 wird die Form des Halteelements 6 vor Ort auf der Baustelle den Querbewehrungselementen 42 angepasst. Im Ausführungsbeispiel nach Fig. 6 verlaufen die Abschnitte 51, 52 des Halteelements 6 und die Schalung 11 jeweils quer, also nicht parallel zueinander.

Die Fig. 7 zeigt ein nicht erfindungsgemäßes, als Leiste ausgebildetes Halteelement 6 in Draufsicht. Die Leiste umfasst mehrere Aufnahmen 14, 15. Die Aufnahmen 14, 15 sind jeweils als Nut 16, 17 ausgebildet. Dabei öffnen erste Nuten 16 zu einer ersten Längsseite 12 der Leiste und zweite Nuten 17 zu einer zweiten Längsseite 13 der Leiste. Die beiden Längsseiten 12, 13 der Leiste liegen einander gegenüber und verlaufen parallel zueinander. Im Ausfuhrungsbeispiel ist je eine erste Nut 16 einer zweiten Nut 17 benachbart, so dass die Nuten 16, 17 immer abwechselnd zu jeder Längsseite 12, 13 öffnen.

In der nicht erfindungsgemäßen Ausführung sind die Nuten 16, 17 als einseitig geöffnete Langlöcher ausgebildet. Die Nutwände 18, 19, 20, 21 der Nuten 16, 17 verlaufen jeweils parallel zueinander. Der Abstand a₁₆ der Nutwände 18, 19 der ersten Nuten 16 ist größer als der Abstand a₁₇ der Nutwände 20, 21 der zweiten Nuten 17. Der Abstand a₁₆ der Nutwände 18, 19 der ersten Nuten 16 entspricht dem Schaftdurchmesser D eines der Schubbewehrungselemente 2 (Fig. 1). Durch den kleineren Abstand a₁₇ der Nutwände 20, 21 der zweiten Nuten 17 können auch Schubbewehrungselemente 2 (Fig. 1) mit kleinerem Schaftdurchmesser in der Leiste aufgenommen werden. Damit können je nach baulichen Anforderungen mechanisch unterschiedlich tragfähige Schubbewehrungselemente 2 eingesetzt werden.

Der Nutgrund 22, 23 der Nuten 16, 17 verläuft in Draufsicht halbkreisförmig mit einem Durchmesser, der etwa dem Abstand a₁₆, a₁₇ der Nutwände 18, 19,20, 21 entspricht. Die Verbindungslinie 24 der Mittelpunkte der Halbkreise verläuft etwa parallel zur Längsmittelachse 25 der Leiste 6. Zweckmäßig kann in einer weiteren, in den Figuren nicht dargestellten Ausführungsform die Verbindungslinie 24 mit der Längsmittelachse 25 zusammenfallen. Zwei benachbarte Nuten 16, 17 besitzen einen Nutabstand N, wobei im Ausführungsbeispiel der Nutabstand N für alle benachbarten Nuten 16, 17 gleich groß ist.

Die Fig. 8 zeigt eine weitere nicht erfindungsgemäße Ausführung eines als Leiste ausgebildeten Halteelements 6'. Die Leiste nach Fig. 8 ist weitgehend identisch zur Leiste nach Fig. 7 aufgebaut. Der wesentliche Unterschied der Leisten besteht darin, dass sämtliche Aufnahmen 14', 15', insbesondere die Nuten 16', 17' der Leiste 6' im Ausführungsbeispiel nach Fig. 8, etwa kongruent, also etwa gleich groß sind.

Die Fig. 9 zeigt eine weitere nicht erfindungsgemäße Ausführung eines als Leiste ausgebildeten Halteelements 6". Die Leiste im Ausführungsbeispiel nach Fig. 9 ist weitgehend identisch zur Leiste im Ausführungsbeispiel nach Fig. 7 aufgebaut. Der wesentliche Unterschied der Leisten besteht darin, dass die Leiste im Ausführungsbeispiel nach Fig. 9 nur auf einer Längsseite 12 Aufnahmen 14 besitzt. Auf der anderen Längsseite 13 sind keine Aufnahmen vorgesehen.

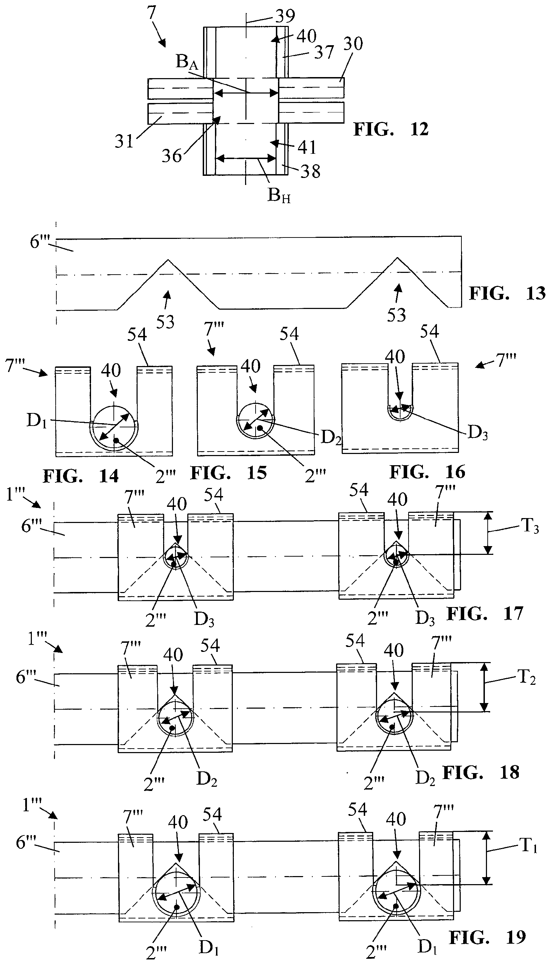

In weiteren Ausführungsformen können die Aufnahmen 14, 15 auf beliebigen Längsseiten 12, 13, in beliebigen Formen, Größen und Nutabständen N angeordnet sein. Einige dieser weiteren Ausführungsformen sind weiter unten zu den Fig. 13 bis 23 beschrieben.

Die Fig. 10 bis 12 zeigen das Befestigungselement 7 in verschiedenen Ansichten. Das Befestigungselement 7 umfasst einen klammerförmigen Grundkörper 26. Der klammerförmige Grundkörper 26 besteht aus zwei in einem Zungenabstand Z parallel zueinander verlaufenden Zungen 27, 28. Der Zungenabstand Z entspricht etwa der Dicke D_{H} des Halteelements 6 (Fig. 1). Die Zungen 27, 28 bilden die Klammerform. Die Zungen 27, 28 besitzen eine Zungenlänge Lz, die etwa der Breite B_{L} der Leiste 6 (Fig. 2) entspricht. Die beiden Zungen 27, 28 sind an einem Ende der Zungen 27, 28 über eine halbkreisförmige Rundung 29 miteinander verbunden. Am gegenüberliegenden Ende der Zungen 27, 28 ist an jeder der Zungen 27, 28 jeweils eine Rastnase 30, 31 angeordnet. Die Rastnasen 30, 31 sind an ihrer Außenseite 32, 33 (Fig. 5) angeschrägt. An ihren Innenseiten 34, 35 (Fig. 5) verlaufen die Rastnasen 30, 31 etwa orthogonal zu den Zungen 27, 28. Das Befestigungselement 7 lässt sich einfach mit dem Halteelement 6 verrasten, indem das Befestigungselement 7 auf das Halteelement 6 geschoben wird. Beim Aufschieben spreizen sich die über die Rundung 29 elastisch miteinander verbundenen Zungen 27, 28, indem die abgeschrägten Außenseiten 32, 33 der Rastnasen 30, 31 auf die Längsseite 12, 13 der Leiste 6 (Fig. 2) geschoben werden. Ist das Befestigungselement 7 so weit auf das Halteelement 6 geschoben, dass die gesamte Breite B_{L} der Leiste 6 von den Zungen 27, 28 umgeben ist, verrasten die Rastnasen 30, 31.

Wie die Fig. 11 und 12 zeigen, besitzen die Zungen 27, 28 eine Aussparung 36. Die Breite B_{A} der Aussparung 36 ist etwa so groß wie der Schaftdurchmesser D (Fig. 1) beziehungsweise wie die Nutbreite a₁₆, a₁₇ (Fig. 2). Damit kann das Befestigungselement 7 derart auf das Halteelement 6 aufgeschoben werden, dass der Schaft 3 (Fig. 1) von den Zungen 27, 28 umgeben ist.

Das Befestigungselement 7 umfasst zwei in den Fig. 10 bis 12 gezeigte Schafthalter 37, 38. Je einer der Schafthalter 37, 38 ist an je einer Zunge 27, 28 angeordnet. Beide Schafthalter 37, 38 umfassen je einen Hohlzylinder mit einem Innendurchmesser D_{Ho}, dessen Wand mit einer Öffnung 40, 41 teilweise geöffnet ist. Die Breite B_{H} der Öffnung 40, 41 ist kleiner als der Schaftdurchmesser D (Fig. 1). Die Breite B_{H} der Öffnung 40, 41 ist kleiner als der Innendurchmesser D_{Ho}. Der Innendurchmesser D_{Ho} entspricht etwa dem Schaftdurchmesser D (Fig. 1). Der Schafthalter 37, 38 ist teilweise elastisch ausgebildet derart, dass die Seitenwände des Schafthalters 37, 38 bei Aufschieben des Befestigungselements 7 auf den Schaft 3 des Schubbewehrungselements 2 (Fig. 1) leicht nach außen gelenkt werden. In der Befestigungsstellung 43 (Fig. 1) umschließen die Seitenwände des Schafthalters 37, 38 den Schaft 3 (Fig. 1) um mehr als 180°, so dass das Schubbewehrungselement 2 (Fig. 1) mit dem Befestigungselement 7 verbunden ist. Im Ausfuhrungsbeispiel ist in der Befestigungsstellung 43 der Schafthalter 37, 38 formschlüssig mit dem Schaft 3 verbunden, wobei das Schubbewehrungselement 2 in Zylinderlängsachse 39 bei Überwindung der Haftreibung zwischen Schaft 3 und Schafthalter 37, 38 verschiebbar ist. Hierbei kann der Schaft 3 (Fig. 1) glatt oder mit Rippen versehen sein.

Die Fig. 13 bis 19 zeigen weitere Ausführungsbeispiele einer Schubbewehrungsvorrichtung 1^{III} (Fig. 17 bis 19) mit einem als Leiste ausgebildeten Halteelement 6^{III} mit zur Leiste passendem Befestigungselement 7^{III} in verschiedenen Ausführungsvarianten und mit einem Schubbewehrungselement 2^{III} mit unterschiedlichen Schaftdurchmessern D₁, D₂, D₃. Die Leiste nach den in den Fig. 13 bis 19 gezeigten Ausführungsbeispielen ist weitgehend identisch zu den Leisten nach den in den Fig. 7 bis 9 gezeigten nicht erfindungsgemäßen Ausführungen. Der wesentliche Unterschied besteht darin, dass die in den Fig. 13 bis 19 gezeigte Leiste anstelle von nutförmigen Aufnahmen 14, 15 (Fig. 7 bis 9) Kerben 53 umfasst. Die Kerben 53 öffnen im Ausführungsbeispiel zu einer Längsseite des Halteelements 6^{III} hin. Die Kerben 53 sind vorgesehen, um das Schubbewehrungselement 2^{III} aufzunehmen. Wie in den Fig. 17 bis 19 dargestellt ist, kann die Kerbe 53 Schubbewehrungselemente 2^{III} mit unterschiedlichen Schaftdurchmessern D₁, D₂, D₃ aufnehmen. Die Schubbewehrungselemente 2^{III} sind mit der Leiste mit den im Wesentlichen aus Fig. 10 bis 12 bekannten Befestigungselementen 7^{III} fixiert. Für jeden Schaftdurchmesser D₁, D₂, D₃ ist je ein Befestigungselement 7^{III} vorgesehen, wobei jedes Befestigungselement 7^{III} bezüglich des Innendurchmessers D_{Ho} (Fig. 11) und der Tiefe T₁, T₂, T₃, die von der Einschubkante 54 des Befestigungselements 7^{III} bis zur Öffnung 40 gemessen ist, an den Schaftdurchmesser D₁, D₂, D₃ angepasst ist.

Im sämtlichen Ausführungsbeispielen ist das Befestigungselement 7 einstückig ausgebildet. Das Befestigungselement 7 besteht aus Kunststoff. Das Halteelement 6 besteht aus Kunststoff, kann in einer weiteren, nicht dargestellten Ausführungsform auch aus Metall, insbesondere aus Baustahl bestehen. Das Schubbewehrungselement 2 besteht im Ausführungsbeispiel aus Baustahl.

Bauteile mit gleichem Bezugszeichen entsprechen in allen Figuren gleichen Bauteilen.

## Patentansprüche

1. Schubbewehrungsvorrichtung für Platten von einer Stahlbeton- oder Spannbetonkonstruktion mit mindestens einem in der Betonkonstruktion angeordneten Bewehrungsstab (8, 9, 74), wobei die Schubbewehrungsvorrichtung (1) längliche, im Wesentlichen die Form eines Bolzens aufweisende Schubbewehrungselemente (2) umfasst, wobei die Schubbewehrungsvorrichtung (1) Befestigungselemente (7) umfasst, wobei in einer Befestigungsstellung (43) mindestens eines der Befestigungselemente (7) an mindestens einem der Schubbewehrungselemente (2) befestigt ist, und wobei in der Befestigungsstellung (43) das Befestigungselement (7) zur Fixierung des Schubbewehrungselements (2) relativ zum Bewehrungsstab (8, 9, 74) vorgesehen ist,
wobei das Schubbewehrungselement (2) in der Befestigungsstellung (43) mit dem Befestigungselement (7) an einem länglichen Halteelement (6) befestigt ist, wobei das längliche Halteelement (6) in der Befestigungsstellung (43) zum Anliegen am Bewehrungsstab (8, 9, 74) vorgesehen ist, wobei das Schubbewehrungselement (2) in der Befestigungsstellung (43) etwa in Richtung (75) der Längsachse des Schubbewehrungselements (2) verschiebbar ist, und wobei das Halteelement (6) eine Leiste ist,
**dadurch gekennzeichnet, dass** die Leiste Kerben (53) umfasst, die vorgesehen sind, um Schubbewehrungselemente (2^{III}) mit unterschiedlichen Schaftdurchmessern (D₁, D₂, D₃) aufzunehmen und dass für jeden Schaftdurchmesser (D₁, D₂, D₃) je ein Befestigungselement (7^{III}) vorgesehen ist, wobei jedes Befestigungselement (7^{III}) bezüglich des Innendurchmessers (D_{Ho}) und der Tiefe (T₁, T₂, T₃), die von der Einschubkante (54) des Befestigungselements (7^{III}) bis zur Öffnung (40) gemessen ist, an den Schaftdurchmesser (D₁, D₂, D₃) angepasst ist.

2. Schubbewehrungsvorrichtung nach Anspruch 1 ,
**dadurch gekennzeichnet, dass** das Befestigungselement (7) mindestens einen Schafthalter (37, 38) umfasst, der den Schaft (3) des Schubbewehrungselements (2) teilweise umgreift.

3. Schubbewehrungsvorrichtung nach Anspruch 2,
**dadurch gekennzeichnet, dass** der Schafthalter (37, 38) mindestens einen Hohlzylinder umfasst, wobei der Hohlzylinder in einer zur Zylinderlängsachse parallelen Richtung mindestens teilweise geöffnet ist, und wobei in Befestigungsstellung (43) der Schaft (3) des Schubbewehrungselements (2) an der Innenseite des Hohlzylinders mindestens teilweise anliegt.

4. Schubbewehrungsvorrichtung nach Anspruch 3,
**dadurch gekennzeichnet, dass** der Schafthalter (37, 38) in der Befestigungsstellung (43) mit dem Schaft (3) des Schubbewehrungselements (2) formschlüssig verbunden ist.

5. Schubbewehrungsvorrichtung nach einem der Ansprüche 1 bis 4,
**dadurch gekennzeichnet, dass** das Befestigungselement (7) an mindestens zwei Befestigungspositionen am Halteelement (6) festlegbar ist, wobei die mindestens zwei Befestigungspositionen in Richtung der Längsachse des Halteelements (6) einen Abstand aufweisen.

6. Schubbewehrungsvorrichtung nach einem der Ansprüche 1 bis 5,
**dadurch gekennzeichnet, dass** am Befestigungselement (7) ein Rastelement vorgesehen ist, wobei das Rastelement in der Befestigungsstellung (43) mit dem Halteelement (6) verrastet ist.

7. Schubbewehrungsvorrichtung nach einem der Ansprüche 1 bis 6,
**dadurch gekennzeichnet, dass** das Halteelement (6) eine Positionsmarkierung (63) aufweist.

8. Schubbewehrungsvorrichtung nach einem der Ansprüche 1 bis 7,
**dadurch gekennzeichnet, dass** ein Ende des Schafts (3) des Schubbewehrungselements (2) einen Kopf (5) aufweist, wobei am Kopf (5) ein Distanzelement (10) angeordnet ist.

9. Schubbewehrungsvorrichtung nach einem der Ansprüche 1 bis 8,
**dadurch gekennzeichnet, dass** das Halteelement (6) plastisch verformbar ist.

10. Schubbewehrungsvorrichtung nach einem der Ansprüche 1 bis 9,
**dadurch gekennzeichnet, dass** die Längsrichtung des Schafts (3) des Schubbewehrungselements (2) und die Längsrichtung des Halteelements (6) quer zueinander verlaufen.

11. Schubbewehrungsvorrichtung nach einem der Ansprüche 1 bis 10,
**dadurch gekennzeichnet, dass** das Befestigungselement (7) und der Schaft (3) des Schubbewehrungselements (2) in der Befestigungsstellung (43) reibschlüssig miteinander verbunden sind.

## Claims

1. Thrust reinforcement device for slabs of a ferro-concrete or pre-stressed concrete construction, with at least one reinforcement bar (8, 9, 74) arranged in the concrete construction, wherein the thrust reinforcement device (1) comprises oblong thrust reinforcement elements (2) substantially having the shape of a bolt, wherein the thrust reinforcement device (1) comprises fastening elements (7), wherein at least one of the fastening elements (7) is fastened to at least one of the thrust reinforcement elements (2) in a fastening position (43), and wherein the fastening element (7) is provided to fix the thrust reinforcement element (2) relative to the reinforcement bar (8, 9, 74) in the fastening position (43),
wherein the thrust reinforcement element (2) is fastened to an oblong holding element (6) by the fastening elements (7) in the fastening position (43), wherein the oblong holding element (6) is provided to contact the reinforcement bar (8, 9, 74) in the fastening position (43), wherein the thrust reinforcement element (2) is displaceable approximately in the direction (75) of the longitudinal axis of the thrust reinforcement element (2) in the fastening position (43), and wherein the holding element (6) is a bar,
**characterised in that** the bar comprises notches (53) provided to accommodate thrust reinforcement elements (2^{III}) of different shank diameters (D₁, D₂, D₃), and **in that** one fastening element (7^{III}) is provided for each shank diameter (D₁, D₂, D₃), wherein each fastening element (7^{III}) is matched to the shank diameter (D₁, D₂, D₃) in terms of the inner diameter (D_{Ho}) and the depth (T₁, T₂, T₃) as measured from the insertion edge (54) of the fastening element (7^{III}) to the opening (40).

2. Thrust reinforcement device according to claim 1,
**characterised in that** the fastening element (7) comprises at least one shank holder (37, 38), which partially encompasses the shank (3) of the thrust reinforcement element (2).

3. Thrust reinforcement device according to claim 2,
**characterised in that** the shank holder (37, 38) comprises at least one hollow cylinder, wherein the hollow cylinder is at least partially open in a direction parallel to the cylinder longitudinal axis, and wherein the shank (3) of the thrust reinforcement element (2) at least partially contact the inside of the hollow cylinder in the fastening position (43).

4. Thrust reinforcement device according to claim 3,
**characterised in that** the shank holder (37, 38) is positively connected to the shank (3) of the thrust reinforcement element (2) in the fastening position (43).

5. Thrust reinforcement device according to any of claims 1 to 4,
**characterised in that** the fastening element (7) can be fixed to the holding element (6) in at least two fastening positions, wherein the at least two fastening positions are spaced in the direction of the longitudinal axis of the holding element (6).

6. Thrust reinforcement device according to any of claims 1 to 5,
**characterised in that** a latching element is provided at the fastening element (7), the latching element being latched to the holding element (6) in the fastening position (43).

7. Thrust reinforcement device according to any of claims 1 to 6,
**characterised in that** the holding element (6) has a position marking (63).

8. Thrust reinforcement device according to any of claims 1 to 7,
**characterised in that** one end of the shank (3) of the thrust reinforcement element (2) has a head (5), a spacer element (10) being located at the head (5).

9. Thrust reinforcement device according to any of claims 1 to 8,
**characterised in that** the holding element (6) is plastically deformable.

10. Thrust reinforcement device according to any of claims 1 to 9,
**characterised in that** the longitudinal direction of the shank (3) of the thrust reinforcement element (2) and the longitudinal direction of the holding element (6) extend transversely to each other.

11. Thrust reinforcement device according to any of claims 1 to 10,
**characterised in that** the fastening element (7) and the shank (3) of the thrust reinforcement element (2) are connected to each other by frictional force in the fastening position (43).

## Revendications

1. Dispositif d'armature de cisaillement pour des plaques d'une construction en béton armé ou béton précontraint comprenant au moins une barre d'armature (8, 9, 74) disposée dans la construction en béton, le dispositif d'armature de cisaillement (1) comprenant des éléments d'armature de cisaillement (2) allongés présentant sensiblement la forme d'un boulon, le dispositif d'armature de cisaillement (1) comprenant des éléments de fixation (7), dans une position de fixation (43), l'un au moins des éléments de fixation (7) étant fixé à l'un au moins des éléments d'armature de cisaillement (2), et dans la position de fixation (43), l'élément de fixation (7) étant prévu pour fixer l'élément d'armature de cisaillement (2) par rapport à la barre d'armature (8, 9, 74),
l'élément d'armature de cisaillement (2) étant fixé dans la position de fixation (43) avec l'élément de fixation (7) à un élément de retenue allongé (6), l'élément de retenue allongé (6) étant prévu pour être appliqué dans la position de fixation (43) contre la barre d'armature (8, 9, 74), l'élément d'armature de cisaillement (2) étant apte, dans la position de fixation (43), à coulisser à peu près dans la direction (75) de l'axe longitudinal de l'élément d'armature de cisaillement (2), et l'élément de retenue (6) étant une baguette,
**caractérisé en ce que** la baguette comprend des encoches (53) qui sont prévues pour loger des éléments d'armature de cisaillement (2^{III}) de différents diamètres de tige (D₁, D₂, D₃), et **en ce que** pour chaque diamètre de tige (D₁, D₂, D₃), il est prévu à chaque fois un élément de fixation (7^{III}), chaque élément de fixation (7^{III}) étant adapté en ce qui concerne le diamètre intérieur (D_{Ho}) et la profondeur (T₁, T₂, T₃), qui est mesurée de l'arête d'insertion (54) de l'élément de fixation (7^{III}) jusqu'à l'ouverture (40) au diamètre de tige (D₁, D₂, D₃).

2. Dispositif d'armature de cisaillement selon la revendication 1,
**caractérisé en ce que** l'élément de fixation (7) comprend au moins une attache de tige (37, 38) qui enserre partiellement la tige (3) de l'élément d'armature de cisaillement (2).

3. Dispositif d'armature de cisaillement selon la revendication 2,
**caractérisé en ce que** l'attache de tige (37, 38) comprend au moins un cylindre creux, le cylindre creux étant au moins partiellement ouvert dans une direction parallèle à l'axe longitudinal de cylindre, et, dans la position de fixation (43), la tige (3) de l'élément d'armature de cisaillement (2) étant appliquée au moins partiellement contre le côté intérieur du cylindre creux.

4. Dispositif d'armature de cisaillement selon la revendication 3,
**caractérisé en ce que** l'attache de tige (37, 38) est reliée dans la position de fixation (43) par complémentarité de forme à la tige (3) de l'élément d'armature de cisaillement (2).

5. Dispositif d'armature de cisaillement selon l'une des revendications 1 à 4,
**caractérisé en ce que** l'élément de fixation (7) est apte à être immobilisé dans au moins deux positions de fixation contre l'élément de retenue (6), les au moins deux positions de fixation présentant un écart dans la direction de l'axe longitudinal de l'élément de retenue (6).

6. Dispositif d'armature de cisaillement selon l'une des revendications 1 à 5,
**caractérisé en ce qu'**il est prévu sur l'élément de fixation (7) un élément de verrouillage, l'élément de verrouillage étant verrouillé dans la position de fixation (43) avec l'élément de retenue (6).

7. Dispositif d'armature de cisaillement selon l'une des revendications 1 à 6,
**caractérisé en ce que** l'élément de retenue (6) présente un marquage de position (63).

8. Dispositif d'armature de cisaillement selon l'une des revendications 1 à 7,
**caractérisé en ce qu'**une extrémité de la tige (3) de l'élément d'armature de cisaillement (2) présente une tête (5), un élément d'écartement (10) étant disposé sur la tête (5).

9. Dispositif d'armature de cisaillement selon l'une des revendications 1 à 8,
**caractérisé en ce que** l'élément de retenue (6) est déformable plastiquement.

10. Dispositif d'armature de cisaillement selon l'une des revendications 1 à 9,
**caractérisé en ce que** la direction longitudinale de la tige (3) de l'élément d'armature de cisaillement (2) et la direction longitudinale de l'élément de retenue (6) s'étendent transversalement l'une par rapport à l'autre.

11. Dispositif d'armature de cisaillement selon l'une des revendications 1 à 10,
**caractérisé en ce que** l'élément de fixation (7) et la tige (3) de l'élément d'armature de cisaillement (2) sont reliés dans la position de fixation (43) par frottement l'un à l'autre.
